# EUROPÄISCHE PATENTSCHRIFT

(11) **EP 2 102 666 B1**
(45) Veröffentlichungstag und Bekanntmachung des Hinweises auf die Patenterteilung: **17.05.2017**
(21) Anmeldenummer: 07821553.0
(22) Anmeldetag: 19.10.2007
(51) Int. Cl.: G01P 15/125, G01P 15/08

(54) **BESCHLEUNIGUNGSSENSOR MIT KAMMELEKTRODEN**
ACCELERATION SENSOR WITH COMB-SHAPED ELECTRODES
DETECTEUR D'ACCELERATION AVEC ELECTRODES A DENTS

(30) Priorität: 19.12.2006 DE 102006059928
(43) Veröffentlichungstag der Anmeldung: 23.09.2009
(73) Patentinhaber: ROBERT BOSCH GMBH, 70442 Stuttgart (DE)
(72) Erfinder: CLASSEN, Johannes, 72764 Reutlingen (DE); HEITZ, Markus, 72127 Kusterdingen (DE); BENNINI, Fouad, Reutlingen, 72762 (DE)
(86) Internationale Anmeldenummer: PCT/EP2007/061189
(87) Internationale Veröffentlichungsnummer: WO 2008/074538

(56) Entgegenhaltungen:
- EP-A- 1 626 283
- DE-A1- 19 639 946
- US-A1- 2003 205 739
- US-A1- 2006 201 249

## Beschreibung

Die Erfindung betrifft einen kapazitiven mikromechanischen Beschleunigungssensor mit Kammelektroden, der sich durch besonders geringe Nullpunktsfehler auszeichnet.

### Stand der Technik

Bei der Herstellung mikromechanischer Beschleunigungssensoren werden durch Abfolgen von Abscheidungs- und Strukturierungsschritten auf einem Substrat bewegliche Strukturen geschaffen, die mechanische Feder-Masse-Systeme darstellen, in denen bei auftretenden Beschleunigungen mindestens eine seismische Masse gegenüber dem Substrat entgegen einer bekannten Rückstellkraft ausgelenkt wird. Das Prinzip kapazitiver Sensoren beruht dabei darauf, dass sowohl mit der seismischen Masse verbundene Elektroden als auch mit dem Substrat verbundene Elektroden umfasst sind, die schaltungstechnisch zu Kondensatoren zusammengefasst sind und im Falle einer Auslenkung der seismischen Masse zueinander eine der Auslenkung der seismischen Masse entsprechende Relativbewegung ausführen, wobei sich die Kapazität der durch die Elektroden gebildeten Kondensatoren in möglichst eindeutiger Abhängigkeit von der Auslenkung der seismischen Masse ändert. Diese Änderung der Kapazität wird schaltungstechnisch erfasst und ausgewertet und ermöglicht die Berechnung der aufgetretenen Beschleunigung. Die Elektroden werden vorzugsweise als Plattenkondensatoren entworfen, wobei sich Sensorgeometrien durchgesetzt haben, die entweder auf der Auswertung einer Abstandsänderung zwischen den Elektroden oder einer Änderung der Größe der Überlappungsbereiche beruhen. Im Falle einer beschleunigungsabhängigen Abstandsänderung dx ist die aus einer Beschleunigung resultierende Kapazitätsänderung gegeben durch dC/C ≈ dx/x₀, wobei C die Gesamtkapazität, also die Ruhekapazität plus parasitäre Kapazitäten der Anordnung bezeichnet und x₀ dem Ruheabstand zwischen den Elektroden entspricht. In Fällen, in denen sich die Größe der Überlappungsbereiche nur in Abhängigkeit von einer Überlappungslänge ändert, ist die aus einer Beschleunigung bzw. Auslenkung dx der seismischen Masse resultierende Kapazitätsänderung gegeben durch dC/C ≈ dx/l₀, wobei C wiederum die Gesamtkapazität bezeichnet und l₀ der Überlappungslänge der Elektroden im Ruhezustand entspricht.

Durch Fertigungsprozesse bzw. nachträgliche Belastungen, insbesondere thermischer Art, kann es zu Substratverformungen kommen, welche mit entsprechenden Relativbewegungen zwischen einzelnen mit dem Substrat verbundenen Strukturelementen verbunden sein können. Besonders kritisch sind in diesem Sinne Nullpunktsauslenkungen dx₀ der mit der seismischen Masse verbundenen Elektroden gegenüber direkt mit dem Substrat verbundenen Elektroden, was zu unerwünschten Offsetsignalen führt, die sich proportional zu dx₀/x₀ bzw. dx₀/l₀ verhalten.

Es ist bekannt, dieses Problem durch eng benachbarte Befestigungsbereiche, in denen die Verbindung zwischen den einzelnen relativ zueinander bewegbaren Strukturelementen und dem Substrat realisiert wird, zu reduzieren (DE 196 39 946 A1). Diese Lösung ist jedoch mit relativ langen Verbindungsbalken zwischen den Befestigungsbereichen und den befestigten Strukturelementen verbunden, was einen hohen Platzbedarf und eine nachteilig reduzierte Steifigkeit der Anordnung bedingt. Des Weiteren betrifft diese Lösung nur einen Beschleunigungssensor, in dem die Bewegung der Elektroden senkrecht zueinander erfolgt, Nullpunktsfehler also proportional zu dx₀/x₀ auftreten. Da zur Erreichung einer ausreichenden Empfindlichkeit in derartigen Sensoren der Ruheabstand x₀ zwischen den Elektroden häufig sehr klein gewählt wird, führen bereits relativ geringe Nullpunktsauslenkungen dx₀ zu signifikanten bzw. nicht tolerierbaren Offsetsignalen, denen auch durch die bekannte Verringerung der Abstände zwischen den Befestigungsbereichen auf dem Substrat unter realistischen Betriebsbedingungen nicht beizukommen ist.

Die Offenlegungsschrift US 2006/201249 A1 zeigt eine Kammantriebsvorrichtung für einen Beschleunigungssensor.

Die Offenlegungsschrift US 2003/205739 A1 zeigt einen Halbleitersensor umfassend eine Waferschicht aus einem Einkristallsilizium.

Die Offenlegungsschrift EP 1 626 283 A zeigt einen Beschleunigungssensor, der in einem Wafer integriert ist. Der Beschleunigungssensor umfasst einen Rotor und einen Stator, welche jeweils Elektroden aufweisen. Die Elektroden sind als Plattenelektroden gebildet.

### Offenbarung der Erfindung

### Technische Aufgabe

Die Aufgabe der Erfindung besteht darin, eine Sensorstruktur für einen mikromechanischen Beschleunigungssensor anzugeben, die sich durch geringe Nullpunktsfehler unter Vermeidung der Nachteile des Standes der Technik auszeichnet. Insbesondere soll die Abhängigkeit der Nullpunktssignale von auftretenden Substratverformungen reduziert werden.

### Technische Lösung

Gelöst wird die Aufgabe durch einen mikromechanischen Beschleunigungssensor mit den Merkmalen von Anspruch 1. Die Unteransprüche 2 bis 8 betreffen vorteilhafte Ausgestaltungen eines erfindungsgemäßen Beschleunigungssensors.

Der Kern der Erfindung besteht in einer konstruktiven Ausführung von mit einer seismischen Masse verbundenen beweglichen Elektroden und mit einem Substrat verbundenen festen Elektroden als Kammelektroden, welche paarweise angeordnet sind. Die Kammelektroden weisen jeweils Querstege auf, an denen sich Elektrodenlamellen befinden. Die Anordnung der Kammelektroden erfolgt dabei in einer Weise, dass die Lamellen der Kammelektroden parallel zur Auslenkrichtung der seismischen Masse verlaufen und die offenen Bereiche der Lamellenanordnungen auf einander zu weisen, wodurch sich die Lamellen zweier paarweise angeordneter Kammelektroden zumindest teilweise überlappen können. Im Bereich der Überlappung der Lamellen bilden die Kammelektroden Kondensatoren, deren Kapazität variiert, wenn sich die Größe der Überlappungsbereiche ändert. Die Erfindung wird verkörpert durch einen mikromechanischen kapazitiven Beschleunigungssensor mit mindestens einer auslenkbar mit einem Substrat verbundenen seismischen Masse, mindestens einer fest mit dem Substrat verbundenen Elektrode und mindestens einer mit der seismischen Masse verbundenen Elektrode, wobei die mindestens eine fest mit dem Substrat verbundene Elektrode und die mindestens eine mit der seismischen Masse verbundenen Elektrode als Kammelektroden mit parallel zur Auslenkrichtung der seismischen Masse verlaufenden Lamellen ausgeführt sind, wobei sich die Lamellen beider Kammelektroden im Ruhezustand teilweise überlappen.

### Vorteilhafte Wirkungen

Durch den erfindungsgemäßen Einsatz von Kammelektroden, bei denen es durch eine Parallelbewegung parallel verlaufender Lamellen zu einer Änderung einer Überlappungslänge kommt, die als Maß für die Auslenkung der seismischem Masse ausgewertet wird, ergeben sich verschiedene Vorteile. Der Nullpunktsfehler ist in diesem Falle durch dx₀/l₀ gegeben. Da die Überlappungslänge l₀ deutlich größer als der Ruheabstand x₀ einer abstandsbasierten Kondensatoranordnung gewählt werden kann, ergibt sich bei einer ansonsten vergleichbaren Nullpunktsauslenkung dx₀ gegenüber herkömmlichen Sensoranordnungen eine deutliche Reduktion des Offset-Signals dC/C.

Die Vorteile einer Anordnung aller Befestigungsbereiche in einem zentralen Bereich des Substrates lassen sich auch in erfindungsgemäßen Sensoranordnungen nutzen, wodurch sich eine besonders hohe Unempfindlichkeit gegenüber Substratverbiegungen und ähnlichen Deformationen erzielen lässt.

Insbesondere, wenn eine seismische Masse als Rahmen ausgeführt ist, welcher die Elektrodenanordnung umgibt, lassen sich durch entsprechende Strukturierungsmaßnahmen alle relevanten Verbindungsbereiche eng benachbart im Zentrum des Substrates unterbringen. Die erfindungsgemäße Sensorkonfiguration wird insbesondere in sogenannten x- und y-Beschleunigungssensoren, bei denen eine Detektion von Beschleunigungen in der Wafer-Ebene erfolgt, mit Vorteil eingesetzt werden können. Besonders vorteilhaft ist es, wenn alle Befestigungsbereiche, in denen Funktionsbaugruppen am Substrat befestigt werden, dicht benachbart so angeordnet sind, dass sie auf einer Linie liegen, die quer zur Auslenkrichtung der seismischen Masse verläuft. Abstandsänderungen zwischen den einzelnen Befestigungsbereichen führen in diesem Falle nahezu ausschließlich zu Relativbewegungen zwischen den Funktionsbaugruppen, die quer zur Messauslenkung der seismischen Masse erfolgen und haben somit keinen Einfluss auf die Überlappungslänge. Eine Querverschiebung ineinander verzahnter Kammelektroden hat dagegen auf die Kapazität eines durch ein Kammelektrodenpaar gebildeten Kondensators keinen Einfluss, da sich Abstandsvergrößerungen und Abstandsverkleinerungen zwischen den Lamellen der Kammelektroden gegenseitig aufheben.

Durch den Einsatz von Kammelektroden lassen sich in vorteilhafter Weise auf engem Raum große Überlappungsbereiche realisieren, was zu entsprechend großen Kapazitäten und einer damit verbundenen großen Empfindlichkeit derart ausgelegter Beschleunigungssensoren führt. Das gilt insbesondere, wenn jeweils mehrere fest mit dem Substrat verbundene Kammelektroden und mehrere mit der seismischen Masse verbundene Kammelektroden umfasst sind, die Kammelektrodenpaare bilden, deren Überlappungslänge von der Auslenkung der seismischen Masse abhängt. Für die Anwendung differenzkapazitiver Auswertemethoden ist es zudem vorteilhaft, wenn mindestens ein Kammelektrodenpaar enthalten ist, dessen Überlappungslänge bei einer Auslenkung der seismischen Masse in der Wafer-Ebene zunimmt und mindestens ein weiteres Kammelektrodenpaar enthalten ist, dessen Überlappungslänge bei der gleichen Auslenkung der seismischen Masse in der Wafer-Ebene abnimmt. Das gilt entsprechend für eine Anordnung jeweils mehrerer Kammelektrodenpaare.

Die Ausführung der seismischen Masse als einen die Elektrodenanordnung umgebenden Rahmen eröffnet die Möglichkeit, weitere vorteilhafte konstruktive Mittel einzusetzen. Die Befestigung der seismischen Masse am Substrat kann vorteilhafterweise über einen Verbindungsbalken erfolgen, welcher in einem zentralen Bereich des Substrates befestigt ist und an seinen Enden mit Federn verbunden ist, die der auslenkbaren Lagerung der seismischen Masse dienen. Diese Federn sind vorteilhafterweise als S-förmige Biegefedern ausgeführt. Eine besonders geringe Querempfindlichkeit der seismischen Masse ergibt sich, wenn die Aufhängung über ein Paar spiegelsymetrisch ausgebildeter S-förmiger Biegefedern erfolgt.

Dem Prinzip einer eng benachbarten Anordnung erforderlicher Befestigungsbereiche folgend, ist es des weiteren vorteilhaft, wenn beidseits des Verbindungsbalkens Trägerbalken zur Aufnahme der fest mit dem Substrat verbundenen Kammelektroden verlaufen, welche ebenfalls lediglich in einem zentralen Bereich des Substrates am Substrat befestigt sind. Aus prozesstechnischen Gründen ist es vorteilhaft, wenn zumindest Teile der seismischen Masse und/oder der Querstege der Kammelektroden als perforierte Flächen ausgeführt sind.

### Kurze Beschreibung der Zeichnungen

An einem Ausführungsbeispiel wird die Erfindung näher erläutert. Es zeigen:
- Fig.1: eine Darstellung einer erfindungsgemäßen Sensoranordnung als Draufsicht auf die Ebene der seismischen Masse; und
- Fig.2: eine Schnittdarstellung durch eine erfindungsgemäße Sensoranordnung entlang der Schnittlinie I-I der Fig. 1.

### Ausführungsform der Erfindung

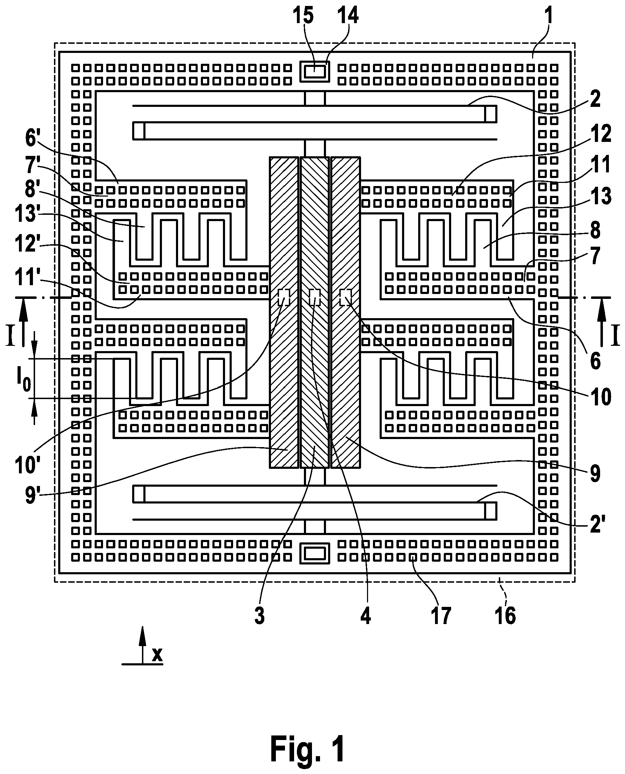

Figur 1 zeigt eine Darstellung einer erfindungsgemäßen Sensoranordnung zur Detektierung von Beschleunigungen im Niederg-Bereich in einer Richtung parallel zur Waferebene als Draufsicht auf die Ebene der seismischen Masse. Die seismische Masse 1 ist als rechteckiger Rahmen ausgebildet, der über ein Paar S-förmiger Biegefedern 2, 2' mit einem Verbindungsbalken 3 in Verbindung steht, welcher wiederum einen zentralen Befestigungsbereich 4 aufweist, in dem der Verbindungsbalken in struktureller Verbindung zu einem Substrat 5 steht. Die S-förmigen Biegefedern 2, 2' sind spiegelsymmetrisch angeordnet und definieren so die Auslenkrichtung der seismischen Masse 1 in x-Richtung, da sich Deformationen der S-förmigen Biegefedern 2, 2' im Fall von Querbeschleunigungen gegenseitig behindern. Auf diese Weise ergibt sich eine geringe Querempfindlichkeit, ohne die Federsteifigkeit in x-Richtung erhöhen zu müssen. Das bildet eine Voraussetzung für die Eignung des erfindungsgemäßen Sensors für eine Verwendung zur Messung niedriger Beschleunigungen. Alternative Federformen, beispielsweise Mehrfach-U-Federn mit geringer Gesamtsteifigkeit, sind ebenfalls realisierbar, beanspruchen jedoch mehr Platz.

Fest mit der rahmenförmigen seismischen Masse 1 verbunden sind Kammelektroden 6, 6', die jeweils einen Quersteg 7, 7' umfassen, welcher jeweils mehrere rechtwinklig zum Quersteg 7, 7' verlaufende Lamellen 8, 8' trägt. Die Lamellen 8, 8' verlaufen parallel zur Auslenkrichtung der seismischen Masse 1. Die fest mit der rahmenförmigen seismischen Masse 1 verbundenen Kammelektroden 6, 6' führen vom parallel zur Auslenkrichtung der seismischen Masse 1 verlaufenden Rahmenbereich in das Innere des Rahmens. Dadurch bildet die rahmenförmige seismische Masse 1 gleichzeitig die äußere Begrenzung des auslenkbaren Funktionselementes, das aus der seismischen Masse 1 und den an ihr befestigten Kammelektroden 6, 6', bestehend aus Querstegen 7, 7' und Lamellen 8, 8', gebildet wird. Parallel zum Verbindungsbalken 3 verlaufen Trägerbalken 9, 9', die ebenfalls jeweils einen zentralen Befestigungsbereich 10, 10' aufweisen, in dem die Trägerbalken 9, 9' in struktureller Verbindung zum Substrat 5 stehen. Die Trägerbalken 9, 9' weisen jeweils auf der dem Verbindungsbalken 3 abgewandten Seite Kammelektroden 11, 11' auf, die ebenfalls aus jeweils einem Quersteg 12, 12' und Lamellen 13, 13' gebildet werden. Durch die Verbindung zu den ihrerseits fest mit dem Substrat verbundenen Trägerbalken 9, 9' stellen diese Kammelektroden 11, 11' fest mit dem Substrat 5 verbundene Elektroden im Sinne der Erfindung dar.

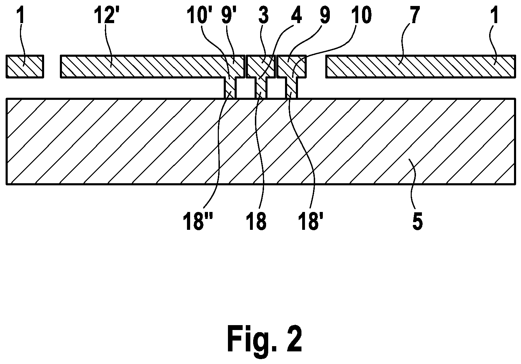

Unter fester Verbindung im Sinne der Erfindung ist dabei zu verstehen, dass Deformationen oder Auslenkungen der befestigten Strukturen bei Auftreten einer Mess- und/oder Störbeschleunigung gegenüber der in diesen Fällen auftretenden Auslenkung der seismischen Masse 1 klein sind. Die dargestellten Querschnitte und Abmessungen in den Figuren 1 und 2 sind nicht maßstabsgerecht und dienen nicht der Illustration des statischen Verhaltens der dargestellten Strukturen, sondern sollen ausschließlich der Beschreibung ihrer relativ zueinander vorgenommenen Anordnung dienen.

Die Kammelektroden 11, 11' an den Trägerbalken 9, 9' und die Kammelektroden 6, 6' an der rahmenförmigen seismischen Masse 1 sind so angeordnet, dass ihre Lamellen 8, 8', 13, 13' auf einander zu weisen und sich teilweise überlappen. Auf diese Weise werden Kammelektrodenpaare gebildet, deren Überlappungslänge von der Auslenkung der seismischen Masse 1 abhängt. Der Abstand zwischen den Spitzen der Lamellen einer Kammelektrode und dem diesen Spitzen gegenüberliegenden Quersteg der jeweils anderen Kammelektrode eines Kammelektrodenpaares ist etwas größer als die maximale Auslenkung der seismischen Masse 1. Die maximale Auslenkung der seismischen Masse 1 wird durch Anschlagsstrukturen festgelegt, die durch rechteckige Aussparungen 14 in der rahmenförmigen seismischen Masse 1 und in diese Aussparungen ragende auf dem Substrat 5 befestigte Säulen 15 gebildet werden. Der Bereich 16 der maximalen Auslenkung der seismischen Masse 1 ist in der Darstellung gestrichelt umrissen. Im vorliegenden Ausführungsbeispiel wird bei Vorliegen dieser maximalen Auslenkung der seismischen Masse 1 eine Berührung der einen Kondensator bildenden Kammelektroden 6, 6', 11, 11' knapp aber sicher vermieden. Auf diese Weise ergibt sich eine maximal nutzbare Überlappung der Lamellen 8, 8', 13, 13' der Kammelektroden 6, 6', 11, 11', die durch die Überlappungslänge l₀ im Ruhezustand der Sensoranordnung beschrieben wird. Da in diesem Fall die Überlappungslänge l₀ relativ groß ist, ergibt sich bei einer typischen fehlerbasierten Nullpunktsauslenkung dx₀ gegenüber herkömmlichen Sensoranordnungen eine deutliche Reduktion des Offset-Signals dC/C. Die Kammelektroden 6, 6', 11, 11' sind so angeordnet, dass sich rechts der Balkenanordnung aus Verbindungs 3 - und Trägerbalken 9, 9' Kammelektrodenpaare 6, 11 befinden, deren Überlappungslängen bei Auslenkung der seismischen Masse 1 in x-Richtung zunehmen und sich links der Balkenanordnung aus Verbindungs 3 - und Trägerbalken 9, 9' Kammelektrodenpaare 6', 11' befinden, deren Überlappungslängen bei Auslenkung der seismischen Masse 1 in x-Richtung abnehmen. Dadurch wird die erfindungsgemäße Sensoranordnung besonders geeignet für differenzkapazitive Auswertemethoden, da ein zu generierendes Messsignal kaum von störenden Quer- und Torsionsbeschleunigungen in der Waferebene beeinflusst wird. Aus prozesstechnischen Gründen weisen die rahmenförmige seismische Masse 1 sowie die Querstege 7, 7', 12, 12' der Kammelektroden 6, 6', 11, 11' eine Perforation 17 auf, um ein einfaches Unterätzen bei der Freistellung der Strukturen zu garantieren. Die zentralen Befestigungsbereiche 4, 10, 10' des Verbindungsbalkens 3 und der Trägerbalken 9, 9' liegen in einer Linie quer zu Auslenkrichtung der seismischen Masse 1. Durch die Anordnung aller Befestigungsbereiche 4, 10, 10' im zentralen Bereich des Substrates 5 ergibt sich eine hohe Unempfindlichkeit gegenüber Substratverbiegungen und ähnlichen Deformationen. Durch die Anordnung aller Befestigungsbereiche 4, 10, 10' auf einer Linie quer zur Auslenkrichtung der seismischen Masse wird diese Unempfindlichkeit gegenüber Substratverbiegungen nochmals gezielt in der Messrichtung (x-Richtung) der Sensoranordnung verbessert, da nur Deformationen, die zu einem Ausrücken eines einzelnen Befestigungsbereiches aus der Flucht der Anordnung aller Befestigungsbereiche 4, 10, 10' führen, auch zu einer Veränderung des Messsignals bzw. des Offsets führen. Derart inhomogene Deformationen treten jedoch in wesentlich geringerem Ausmaß auf und sind in erfindungsgemäßen Sensoranordnungen bei normalen Betriebsbedingungen messtechnisch nicht relevant.

Figur 2 zeigt eine schematische Schnittdarstellung durch eine erfindungsgemäße Sensoranordnung entlang der Schnittlinie I-I der Fig. 1. Auf einem Substrat 5 aus Silizium erheben sich in Form rechteckiger Säulen 18, 18', 18" Stützstrukturen, die zu den Befestigungsbereichen 4, 10, 10' des Verbindungsbalkens 3 und der Trägerbalken 9, 9' führen und für deren feste Verbindung mit dem Substrat 5 sorgen. Die Befestigungsbereiche 4, 10, 10' liegen dicht benachbart auf der Schnittlinie I-I quer zur Auslenkrichtung der seismischen Masse 1. Über dem Substrat 5 wird die seitliche Erstreckung der Anordnung durch die rahmenförmige seismische Masse 1 bestimmt. Im linken Bereich der Darstellung ist der Querschnitt der seismischen Masse 1 im Bereich eines parallel zur Auslenkungsrichtung verlaufenden Rahmenbereiches sichtbar, im rechten Bereich der Darstellung wird die seismische im Bereich der Verbindung zu einem Quersteg 7 einer Kammelektrode 6 geschnitten. Die seismische Masse 1 steht nur über den Verbindungsbalken 3 mit dem Substrat 5 in Verbindung. Rechts des Verbindungsbalkens 3 ist der Querschnitt eines Trägerbalkens 9 dargestellt, links des Verbindungsbalkens 3 wird ein Trägerbalken 9' im Bereich eines an ihm angebachten Quersteges 12' einer Kammelektrode 11' geschnitten.

## Patentansprüche

1. Mikromechanischer kapazitiver Beschleunigungssensor mit mindestens einer auslenkbar mit einem Substrat (5) verbundenen seismischen Masse (1), mindestens einer fest mit dem Substrat (5) verbundenen Elektrode (11) und mindestens einer mit der seismischen Masse (1) verbundenen Elektrode (6), wobei die mindestens eine fest mit dem Substrat (5) verbundene Elektrode (11) und die mindestens eine mit der seismischen Masse (1) verbundenen Elektrode (6) als Kammelektroden (6, 11) mit parallel zur Auslenkrichtung der seismischen Masse (1) verlaufenden Lamellen (8, 13) ausgeführt sind, wobei sich die Lamellen (8, 13) beider Kammelektroden (6, 11) im Ruhezustand teilweise überlappen, wobei ein im zentralen Bereich des Substrates (5) befestigter Verbindungsbalken (3) umfasst ist, der zu Federn (2, 2') führt, welche die seismische Masse (1) auslenkbar tragen, **dadurch gekennzeichnet** beidseits des Verbindungsbalkens (3) Trägerbalken (9, 9') zur Aufnahme der fest mit dem Substrat verbundenen Kammelektroden (11, 11') verlaufen, wobei die Trägerbalken (9, 9') ebenfalls im zentralen Bereich des Substrates (5) am Substrat (5) befestigt sind.

2. Beschleunigungssensor nach Anspruch 1, **dadurch gekennzeichnet, dass** jeweils mehrere fest mit dem Substrat (5) verbundene Kammelektroden (11, 11') und mehrere mit der seismischen Masse (1) verbundene Kammelektroden (6, 6') umfasst sind, die Kammelektrodenpaare (6, 11; 6' 11') bilden, deren Überlappungslänge von der Auslenkung der seismischen Masse (1) abhängt.

3. Beschleunigungssensor nach Anspruch 1 oder 2, **dadurch gekennzeichnet, dass** die seismische Masse (1) als Rahmen ausgeführt ist, welcher die Elektrodenanordnung umgibt.

4. Beschleunigungssensor nach einem der Ansprüche 1 bis 3, **dadurch gekennzeichnet, dass** die seismische Masse (1) über S-förmige Biegefedern (2, 2') mit dem Substrat (5) verbunden ist.

5. Beschleunigungssensor nach einem der vorherigen Ansprüche, **dadurch gekennzeichnet, dass** die Bereiche (4, 10, 10'), in denen der Verbindungsbalken (3) und die Trägerbalken (9, 9') am Substrat (5) befestigt sind, auf einer Linie liegen, die quer zur Auslenkrichtung der seismischen Masse (1) verläuft.

6. Beschleunigungssensor nach einem der Ansprüche 1 bis 5, **dadurch gekennzeichnet, dass** die seismische Masse (1) durch ein Paar spiegelsymmetrisch angeordneter S-förmiger Biegefedern (2, 2') mit dem Substrat (5) in Verbindung steht.

7. Beschleunigungssensor nach einem der Ansprüche 1 bis 6, **dadurch gekennzeichnet, dass** mindestens ein Kammelektrodenpaar (6, 11) enthalten ist, dessen Überlappungslänge bei einer Auslenkung der seismischen Masse (1) in der Wafer-Ebene zunimmt und mindestens ein weiteres Kammelektrodenpaar (6', 11') enthalten ist, dessen Überlappungslänge bei der gleichen Auslenkung der seismischen Masse (1) in der Wafer-Ebene abnimmt.

8. Beschleunigungssensor nach einem der Ansprüche 1 bis 7, **dadurch gekennzeichnet, dass** zumindest Teile der seismischen Masse (1) und/oder der Querstege (7, 7', 12, 12') der Kammelektroden (6, 6', 11, 11') als perforierte Flächen ausgeführt sind.

## Claims

1. Micromechanical capacitive acceleration sensor having at least one seismic mass (1) deflectably connected to a substrate (5), at least one electrode (11) rigidly connected to the substrate (5) and at least one electrode (6) connected to the seismic mass (1), wherein the at least one electrode (11) rigidly connected to the substrate (5) and the at least one electrode (6) connected to the seismic mass (1) are embodied as comb-shaped electrodes (6, 11) with lamellae (8, 13) extending parallel to the deflection direction of the seismic mass (1), the lamellae (8, 13) of both comb-shaped electrodes (6, 11) overlapping partly in the rest state, the sensor comprising a connecting beam (3) which is fixed in the central area of the substrate (5) and which leads to springs (2, 2') which carry the seismic mass (1) deflectably,
**characterized in that** on both sides of the connecting beam (3) there extend carrier beams (9, 9') for holding the comb-shaped electrodes (11, 11') rigidly connected to the substrate, wherein the carrier beams (9, 9') are likewise fixed to the substrate (5) in the central area of the substrate (5).

2. Acceleration sensor according to Claim 1, **characterized in that** it comprises in each case a plurality of comb-shaped electrodes (11, 11') rigidly connected to the substrate (5) and a plurality of comb-shaped electrodes (6, 6') connected to the seismic mass (1), which form comb-shaped electrode pairs (6, 11; 6', 11'), the overlapping length of which depends on the deflection of the seismic mass (1).

3. Acceleration sensor according to Claim 1 or 2, **characterized in that** the seismic mass (1) is embodied as a frame which surrounds the electrode arrangement.

4. Acceleration sensor according to one of Claims 1 to 3, **characterized in that** the seismic mass (1) is connected to the substrate (5) via S-shaped flexible springs (2, 2').

5. Acceleration sensor according to one of the preceding claims, **characterized in that** the areas (4, 10, 10') in which the connecting beam (3) and the carrier beams (9, 9') are fixed to the substrate (5) lie on a line which extends transversely with respect to the deflection direction of the seismic mass (1).

6. Acceleration sensor according to one of Claims 1 to 5, **characterized in that** the seismic mass (1) is connected to the substrate (5) by a pair of mirror-symmetrically arranged S-shaped flexible springs (2, 2').

7. Acceleration sensor according to one of Claims 1 to 6, **characterized in that** it contains at least one comb-shaped electrode pair (6, 11), the overlapping length of which increases in the wafer plane during a deflection of the seismic mass (1), and at least one further comb-shaped electrode pair (6', 11'), the overlapping length of which decreases in the wafer plane during the same deflection of the seismic mass (1).

8. Acceleration sensor according to one of Claims 1 to 7, **characterized in that** at least parts of the seismic mass (1) and/or of the transverse webs (7, 7', 12, 12') of the comb-shaped electrodes (6, 6', 11, 11') are embodied as perforated surfaces.

## Revendications

1. Capteur d'accélération capacitif micromécanique comportant au moins une masse sismique (1) reliée de manière déployable à un substrat (5), au moins une électrode (11) reliée de manière fixe au substrat (5) et au moins une électrode (6) reliée à la masse sismique (1), dans lequel l'au moins une électrode (11) reliée de manière fixe au substrat (5) et l'au moins une électrode (6) reliée à la masse sismique (1) sont réalisées sous la forme d'électrodes en peigne (6, 11) ayant des lamelles (8, 13) s'étendant parallèlement à la direction de déploiement de la masse sismique (1), dans lequel les lamelles (8, 13) des deux électrodes en peigne (6, 11) se chevauchent partiellement à l'état de repos, dans lequel il est prévu une barre de liaison (3) fixée dans la zone centrale du substrat (5), qui conduit vers des ressorts (2, 2') portant de manière déployable la masse sismique (1), **caractérisé en ce que** des barres de support (9, 9') destinées à recevoir les électrodes en peigne (11, 11') reliées de manière fixe au substrat s'étendent des deux côtés de la barre de liaison (3), dans lequel les barres de support (9, 9') sont également fixées au substrat (5) dans la zone centrale du substrat (5).

2. Capteur d'accélération selon la revendication 1, **caractérisé en ce qu'**il est respectivement prévu plusieurs électrodes en peigne (11, 11') reliées de manière fixe au substrat (5) et plusieurs électrodes en peigne (6, 6') reliées à la masse sismique (1) qui forment des paires d'électrodes en peigne (6, 11 ; 6', 11') dont la longueur de chevauchement dépend du déploiement de la masse sismique (1).

3. Capteur d'accélération selon la revendication 1 ou 2, **caractérisé en ce que** la masse sismique (1) est réalisée sous la forme d'un châssis qui entoure le système d'électrodes.

4. Capteur d'accélération selon l'une quelconque des revendications 1 à 3, **caractérisé en ce que** la masse sismique (1) est reliée au substrat (5) par l'intermédiaire de ressorts de flexion en S (2, 2').

5. Capteur d'accélération selon l'une quelconque des revendications précédentes, **caractérisé en ce que** les zones (4, 10, 10') dans lesquelles la barre de liaison (3) et les barres de support (9, 9') sont fixées au substrat (5) se situent sur une droite qui s'étend transversalement à la direction de déploiement de la masse sismique (1).

6. Capteur d'accélération selon l'une quelconque des revendications 1 à 5, **caractérisé en ce que** la masse sismique (1) est reliée au substrat (5) par l'intermédiaire d'une paire de ressorts de flexion en S (2, 2') disposés de manière symétrique dans un miroir.

7. Capteur d'accélération selon l'une quelconque des revendications 1 à 6, **caractérisé en ce qu'**il est prévu au moins une paire d'électrodes en peigne (6, 11) dont la longueur de chevauchement diminue lors d'un déploiement de la masse sismique (1) dans le plan de la plaquette et **en ce qu'**il est prévu au moins une autre paire d'électrodes en peigne (6', 11') dont la longueur de chevauchement diminue lors du même déploiement de la masse sismique (1) dans le plan de la plaquette.

8. Capteur d'accélération selon l'une quelconque des revendications 1 à 7, **caractérisé en ce qu'**au moins certaines parties de la masse sismique (1) et/ou des nervures transversales (7, 7', 12, 12') des électrodes en peigne (6, 6', 11, 11') sont réalisées sous la forme de surfaces perforées.
